# EUROPEAN PATENT APPLICATION

(11) **EP 1 568 878 A2**
(43) Date of publication of application: **31.08.2005**
(21) Application number: 05002358.9
(22) Date of filing: 04.02.2005
(51) Int. Cl.: F02M 35/10

(54) **Air intake system for engine**

(30) Priority: 26.02.2004 JP 2004050972; 26.02.2004 JP 2004050974
(71) Applicant: Mazda Motor Corporation, Hiroshima 735-8670 (JP)
(72) Inventor: Inatomi, Hiroshi, Aki-gun Hiroshima 735-8670 (JP); Asanomi, Kouji, Saeki-ku, Hiroshima 731-5101 (JP); Suzuki, Toshitaka, Aki-gun Hiroshima 735-8670 (JP); Sasaki, Shin, Aki-gun Hiroshima 735-8670 (JP)
(74) Representative: Laufhütte, Dieter

(57) **Abstract**

In an air intake system for a multi-cylinder in line engine (2) mounted transversely in an engine compartment (1), intake branch pipes of an intake manifold (4,9) extended rearward of the vehicle over the cylinder head cover (3) from intake ports formed in the vehicle front side face of the engine are respectively offset frontward of the engine against spark plug units (31) projecting upward from the cylinder head cover (3), and at least a part of each intake branch pipe (41,91) overlaps vertically when viewing the engine form the rear side. An air cleaner unit (6,10) is arranged above a transmission (2) on the rear side of the engine (2).

## Description

### Technical Field to Which the Invention Belongs

The present invention relates to an air intake system for an engine.

### Related Background Art

In recent years, weight reduction and downsizing of vehicles are promoted for improving fuel consumption. In association, an engine compartment is decreased in volume, with a result that an engine and functional engine elements are difficult to be arranged in such a small engine compartment.

In an engine mounted transversely in an engine compartment, for example, an intake manifold is usually arranged on the vehicle front side of the engine. In this engine, the substantially entire part of the intake manifold projects from the engine body toward the vehicle front side and the engine itself is inclined rearward of the vehicle for ensuring a crushable zone in the small engine compartment. In such layout, however, a space that the engine occupies shall be large in the longitudinal and vertical directions of the vehicle, while ensuring the crushable zone.

For improving the above deficiency, an engine of front-intake/rear-exhaust type disposed transversely in an engine compartment is proposed in which each intake branch pipe of an intake manifold is extended from corresponding intake ports in the side face on the vehicle front side rearward of the vehicle over a cylinder head cover, as disclosed in U.S. Pat. No. 5,005,534. In such a construction, projection by the engine frontward of the vehicle is restricted and the space that the engine occupies in the engine compartment is reduced in the longitudinal direction of the vehicle, compared with a conventional construction in which an intake manifold is arranged on the vehicle front side of the engine. However, the overall height of the engine is increased by the height of the intake branch pipes protruding above the cylinder head cover because the crushable zone, which is required between the engine and a hood thereabove, as well as in front of the engine, must be ensured sufficiently.

Therefore, in the engine disclosed in U.S. Pat. No. 5,005,534, the intake branch pipes are offset rearward of the engine against spark plug units over the engine, respectively. Such a construction enables to overlap the intake branch pipes with the spark plug units when viewing the engine from the rear side, respectively, resulting in the reduction of the overall height of the engine.

It is required to arrange various kinds of functional engine elements efficiently in a small space of an engine compartment. If a space from a part above the transmission, which is disposed under one side of the rear portion of the engine, to a part above the rear portion of the cylinder head cover is increased, functional engine elements such as an air cleaner unit and the like can be arranged efficiently. However, in the engine disclosed in U.S. Pat. No. 5,005,534, the intake branch pipes are offset rearward of the engine against the spark plug units, respectively, so that the intake branch pipes occupy the space above the rear portion of the cylinder head cover located, resulting in reduction in the space.

### Disclosure of the Invention

The present invention has been made in view of the above problems and has its object of arranging an intake manifold and an air cleaner unit compactly while restricting the overall width and overall height of an engine including the intake manifold by restricting projection by the intake manifold frontward of the vehicle and upward of the engine.

The first invention directs to an air intake system an air intake system for a multi-cylinder in line engine mounted transversely in an engine compartment so that intake ports and exhaust ports are formed in a vehicle front side face and a vehicle rear side face, respectively.

The air intake system includes: an intake manifold including a plurality of intake branch pipes which are extended rearward of a vehicle from the intake ports over a cylinder head cover of the engine, respectively, and an intake air collecting pipe which communicates with the intake branch pipes on a vehicle rear side of the engine and into which the intake branch pipes are gathered; and an air cleaner unit which is provided above a transmission on a rear side on the engine.

Further, the intake branch pipes are respectively offset frontward of the engine against the spark plug units respectively standing upright at central portions of the corresponding cylinders and projecting upward from an upper face of the cylinder head cover when viewing the engine in a plane, and at least each part of the intake branch pipes overlaps vertically with the spark plug unit when viewing the engine from the rear side.

In the above construction, the engine is mounted transversely in the engine compartment and the intake ports for introducing intake air is arranged in the side face of the engine on the vehicle front side. The intake branch pipes of the intake manifold communicating with the intake ports are extended rearward of the vehicle from the intake ports, respectively, over the cylinder head cover of the engine.

In this connection, projection by the intake manifold frontward of the engine is restricted and the overall width of the engine is reduced, compared with a construction in which the intake manifold as a substantial whole including the intake branch pipes and the intake air collecting pipe is arranged in front of the engine where the intake ports open.

Further, each spark plug unit standing in the middle of the corresponding cylinder of the engine protrudes from the upper face of the cylinder head cover, wherein the intake branch pipes are respectively offset against the spark plug units frontward of the engine when viewing the engine in a plane and at least parts thereof overlaps with one another vertically when viewing the engine from the rear side.

In this connection, the intake branch pipes can be avoided from interfering with the spark plug units and the overall height of the engine is reduced by the vertical overlap between the intake branch pipes and the spark plug units.

Furthermore, the offset of the intake branch pipes against the spark plug units frontward of the engine creates a space at least a part on the rear side of a rearmost spark plug unit in the direction of the cylinder line of the engine and above the cylinder head cover. The air cleaner unit can be arranged above the transmission on the rear side of the engine by utilizing the thus created space. Thus, a space for arranging the air cleaner unit can be ensured in the small engine compartment.

As described above, according to the present invention, in the air intake system for the multi-cylinder in line engine mounted transversely in the engine compartment so that the intake ports are arranged in the side face at front of the vehicle, the intake branch pipes are extended from the intake ports rearward of the vehicle over the cylinder head cover, respectively. As a result, the intake manifold including the intake air collecting pipe is projected not substantially entirely from the engine toward the vehicle front side and the overall width of the engine including the air intake system is reduced.

Moreover, the intake branch pipes are offset frontward of the engine over the cylinder head cover for avoiding interference with the spark plug units projecting from the cylinder head cover, and are overlapped vertically at at least each part thereof with the spark plug units when viewing from the engine rear side, thereby reducing the overall height of the engine including the air intake system.

In addition, the offset of the intake branch pipes frontward of the engine ensures a space for arranging the air cleaner unit in the space from a part above the transmission on the engine rear side to the rearmost intake branch pipe in the direction of the cylinder line of the engine, resulting in efficient space utilization in the small engine compartment.

The second invention provides an air intake system according to the first invention, wherein each intake branch pipe includes a curved portion which is extended frontward of the vehicle and upward from the corresponding intake port and is curved rearward of the vehicle, and an extended portion which continues to the curved portion and is extended substantially linearly and rearward of the vehicle over the cylinder head cover, and the curved portion is inclined frontward of the engine.

In the above construction, each extended portion of the intake branch pipes is offset against the corresponding intake ports frontward of the engine by the offset thereof against the spark plug units frontward of the engine over the cylinder head cover, and each curved portion is inclined frontward of the engine so that the intake ports and the extended portions communicate with one another through the curved portions, respectively. Each intake branch pipe is extended from the corresponding intake port in the side face of the engine on the vehicle front side to the vehicle rear side of the engine over the cylinder head cover.

Further, the inclination of each curved portion increases the radius of curvature of each curved portion, resulting in reduction of intake resistance in the intake manifold and increase in filling efficiency of intake air to each cylinder.

The third invention provides an air intake system according to the first or second invention, wherein the air cleaner unit includes: an air cleaner case in which a dusty side room and a clean side room are divided transversely by an air cleaner element, a fresh air sucking port being formed in a vehicle rear side portion of the clean side room; a fresh air pipe which communicates at one end thereof with the fresh air sucking port and at the other end thereof with the intake air collecting pipe; and a throttle valve unit which is provided in the middle of the fresh air pipe.

Further, the air cleaner element is inclined so that the clean side room expands vertically as it goes rearward of the vehicle, and the fresh air pipe and the throttle valve unit have a same height as that of the intake manifold or are located lower than the intake manifold.

In the above construction, the inclination of the air cleaner element in the air cleaner case increases the area of the air cleaner element, compared with the case where the air cleaner element is arranged perpendicular or horizontal to the air cleaner case.

Further, the air cleaner element is inclined so as to expand the clean side room as it goes rearward of the vehicle rear side, thereby ensuring a sufficient space for forming the fresh air sucking port on the vehicle rear side of the clean side room.

In detail, the overall height of the air cleaner case must be increased for ensuring a sufficient area of the air cleaner element in the case where the air cleaner element is arranged perpendicularly, and the overall height of the air cleaner case must be also increased for ensuring a sufficient space for forming a fresh air sucking port on the vehicle rear side of the air cleaner case in the case where it is arranged horizontally. While, the air cleaner element is inclined so as to expand the clean side room as it goes rearward of the vehicle rear side in the above air intake system, with a result that the area of the air cleaner element is increased and a sufficient space is ensured for forming the fresh air sucking port on the vehicle rear side of the clean side room.

Moreover, the fresh air sucking port communicates with the intake air collecting pipe through the fresh air pipe having the throttle valve unit. In detail, fresh air introduced to the air cleaner unit flows into the clean side room from the dusty side room through the air cleaner element, flows into the fresh air pipe through the fresh air sucking port to be adjusted in the air amount thereof by the throttle valve unit, and then, is sent into the intake air collecting pipe.

Furthermore, the fresh air pipe and the throttle valve unit do not project further than the intake manifold from the upper portion of the engine, thereby reducing the overall height of the engine including the air intake system such as the air cleaner unit and the like.

The fourth invention provides an air intake system according to any one of first to third invention, wherein the air cleaner unit further includes a resonance chamber which is integrally arranged with the air cleaner case at a part where at least a part of the resonance chamber overlaps with the cylinder head cover when viewing the engine in a plane between a rearmost intake branch pipe in the direction of the cylinder line of the engine and the air cleaner case.

Further, the air cleaner case is arranged above the transmission at a part where the air cleaner case overlaps with the cylinder head cover and a cylinder head when viewing the engine from the rear side.

In the above construction, the air cleaner unit including the air cleaner case and the resonance chamber is arranged in the space from a part above the transmission on the engine rear side to a part above the end portion on the engine rear side of the cylinder head cover. In other words, the offset of the rearmost intake branch pipe in the direction of the cylinder line of the engine frontward of the engine creates a space above the cylinder head cover and enables to arrange at least a part of the resonance chamber in the thus created space. Thus, the space in the small engine compartment is efficiently utilized.

Further, the air cleaner case is arranged at a part where it overlaps with the cylinder head cover and the cylinder head when viewing the engine from the rear side for reducing the height of the air cleaner case, thereby reducing the overall height of the engine.

The fifth invention provides an air intake system according to any one of the first to fourth inventions, wherein in the engine compartment, a vacuum toggle for break and a battery are arranged on one side and on the other side in a widthwise direction of the vehicle, respectively, and the engine is arranged between the vacuum toggle and the battery in a widthwise direction of the vehicle in the engine compartment.

In the above construction, the vacuum toggle for break and the battery are arranged on one side and on the other side in the vehicle transverse direction of the engine compartment with the engine interposed, respectively, when viewing the engine compartment in a plane. For this reason, when the power unit including the engine and the transmission, which are heavy, is arranged in the middle in the vehicle transverse direction, the functional engine elements including the vacuum toggle for break and the battery, which occupy a comparatively large space, can be arranged in the engine compartment in balance.

The sixth invention provides an air intake system according to any one of the first to fifth inventions, wherein the engine is mounted substantially perpendicular.

In the above construction, the intake branch pipes of the intake manifold are respectively extended from the intake ports rearward of the vehicle over the cylinder head cover of the engine and are respectively offset against the spark plug units frontward of the engine when viewing the engine in a plane, while overlapping at at least parts thereof in the vertical direction when viewing the engine from the rear side, resulting in reduction of the overall width and the overall height of the engine. The engine having the thus reduced overall width and height necessitates no inclination of the engine rearward of the vehicle for reducing, in the vehicle longitudinal direction, the space that the engine occupies. The perpendicular arrangement, that is, upright mounting of the engine reduces the space that the engine occupies in the engine compartment in the vehicle longitudinal direction, rather than inclined arrangement of the engine rearward of the vehicle. No necessity of the inclination of the engine rearward of the vehicle enables the substantially upright mounting of the engine. As a result, the space that the engine occupies in the engine compartment is reduced in the vehicle longitudinal direction and the crushable zone is ensured on the vehicle front side of the engine.

The seventh invention provides an air intake system according to the first invention, wherein the intake manifold further includes an intake pipe length exchanging device for exchanging an intake pipe length, the intake pipe length exchanging device includes: short pipes respectively communicating with the intake pipe branches; an expansion room communicating with the respective intake branch pipes through the respective short pipes; and switch valves for respectively communicating with and shutting off between the expansion room and the intake branch pipes, a bonnet which slants forward defines the engine compartment so as to reduce a height as it goes frontward of the vehicle, the engine is mounted substantially perpendicular, each intake branch pipe is inclined so as to increase a height thereof as it goes rearward of the vehicle along the bonnet that slants forward over the cylinder head cover, and the expansion room is arranged between a vehicle rear side end of the intake branch pipe and the cylinder head cover. It is noted that the expansion room includes an expansion room disposed so that at least a part thereof is located in a space between the end portions on the vehicle rear side of the intake branch pipes and the cylinder head cover.

In the above construction, the intake branch pipes extended over the cylinder head cover are inclined so as to increase their height on the vehicle rear side along the bonnet that slants forward. As a result, the crushable zone is ensured between the intake branch pipes and the bonnet.

Further, the inclination of the intake branch pipes so as to increase their height on the vehicle rear side creates a space between the vehicle rear side portions of the intake branch pipes and the cylinder head cover, and therefore, the intake pipe length exchanging device can be arranged by utilizing the space under the intake branch pipes and above the cylinder head cover. The intake pipe length exchanging device includes the expansion room arranged in the space between the vehicle rear side portions of the intake branch pipes and the cylinder head cover. Herein, the vehicle rear side of the engine means a whole part on the vehicle rear side farther rearward than the center of the engine in the vehicle longitudinal direction and includes the space on the vehicle rear side farther rearward than the rear end in the vehicle longitudinal direction of the engine, as well as the space on the vehicle rear side farther rearward than the center of the engine and above the engine. The expansion room communicates with the intake branch pipes through the short pipes. The switch valve provided in each short pipe switches the state between the communicating state and the intercepted state between the expansion room and the corresponding intake branch pipe. The intake pipe exchanging device may communicate, for example, the expansion room with the intake air collecting pipe and opens and closes the switch valves so as to exchange the passage between the high-speed intake passage having a short pipe length and passing through the expansion room, each short pipe and each intake branch pipe from the intake air collecting pipe and the low-speed intake passage having a long pipe length and passing through every pipe of the intake branch pipes from the intake air collecting pipe. Also, the expansion room may communicate only with the short pipes of the intake branch pipes to function as a communication pipe for communicating the intake branch pipes in the middle of the passage. With this construction, it is possible to switch the apparent intake pipe length in a manner that the switch valves are opened and closed to exchange the pressure inversion part where the basic pressure wave of intake air is inverted.

Hence, according to the seventh invention, the inclination of the intake branch pipes so as to increase their height on the vehicle rear side along the bonnet that slants forward ensures the crushable zone between the intake branch pipes and the bonnet and enables efficient arrangement of the intake pipe exchanging device under the vehicle rear side portions of the intake branch pipes and above the cylinder head cover.

The eighth invention provides an air intake system according to the seventh invention, wherein each intake branch pipe is curved downward at an upstream end thereof to form an upstream curved portion that communicates with the intake air collecting pipe, and the intake air collecting pipe and the expansion room are arranged side by side in a longitudinal direction of the vehicle at a part farther frontward of the vehicle than the upstream curved portion when viewing the engine from the rear side.

In the above construction, each intake branch pipe includes at the upstream end thereof the curved portion that curves downward. The curved portion communicates with the intake air collecting pipe located below the curved portion. Also, the expansion room located under the vehicle rear side portion of the intake branch pipes is arranged beside the intake air collecting pipe on the vehicle front side of the intake air collecting pipe.

As a result, the expansion room and the intake air collecting pipe are located side by side under the vehicle rear side portions of the intake branch pipes in the vehicle longitudinal direction, rather than in the vertical direction. As a result, the height of the intake manifold is reduced. With this construction, also, each intake branch pipe can have a longer length, to enhance the low-speed torque of the engine. Further, the intake branch pipes hide the expansion room and the intake air collecting pipe when viewing the engine in a plane, which enhance the appearance of the upper portion of the engine even with no engine cover provided.

The ninth invention provides an air intake system according to the seventh or eighth invention, wherein the expansion room is arranged farther rearward of the vehicle than the spark plug units, while the switch valves being arranged farther frontward of the vehicle than the spark plug units, and a valve axis of each switch valve is extended in a direction of a cylinder line of the engine.

In the above construction, the expansion room can be arranged by efficiently utilizing the space between the spark plug units and the intake air collecting pipe.

The valve axes of the switch valves which extend in the direction of the cylinder line is set farther frontward of the vehicle than the spark plug units. Therefore, a single shaft connecting with each switch valve of the intake branch pipes as a drive shaft for driving each switch valve can be provided so as to avoid interference with the spark plug units.

Further, the switch valves are provided farther frontward of the vehicle than the spark plug units, so that each communication portion between the corresponding short pipe and the corresponding intake branch pipe where the switch valves are provided is located farther frontward than the corresponding spark plug unit, resulting in increase in difference in intake pipe length which is caused by switching the switch valves. Hence, the intake air filing rate to the widely ranging number of rotation of the engine can be set optimally.

The tenth invention provides an air intake system according to any one of the first to ninth inventions, wherein the engine includes: a timing chain for driving and connecting a camshaft and a crankshaft which are provided in the cylinder head; and a chain room defining a front portion of the engine and accommodating the timing chain.

Further, a front end portion of the cylinder head cover covers an upper portion of the chain room so as to form an upper face of the chain room, and an engine oil filler port is formed in the front end portion of the cylinder head cover.

In the above construction, the camshaft is driven by the crankshaft through the timing chain, which is accommodated in the chain room defining at the front of the engine. The upper face of the chain room is defined by the front end portion of the cylinder head cover, and the engine oil filler port is formed in the front end portion of the cylinder head cover that covers the upper portion of the chain room thereover. In this connection, the engine oil filler port is apart from the foremost spark plug unit in the direction of the cylinder line of the engine in the engine longitudinal direction, thereby ensuring a space for offsetting the intake branch pipes in a part farther frontward of the engine than the foremost spark plug unit.

### Brief Description of the Drawings

FIG. **1** is a plan view showing an engine according to the first embodiment of the present invention.
FIG. **2** is a right side view of the engine according to the first embodiment of the present invention.
FIG. **3** is a perspective view of the front portion of the engine according to the first embodiment of the present invention.
FIG. **4** is a rear elevation of the engine according to the first embodiment of the present invention.
FIG. **5** is a partially sectional view of an intake manifold of the engine according to the first embodiment of the present invention.
FIG. **6** is a front view of the engine according to the first embodiment of the present invention.
FIG. **7** is a plan view showing an engine according to the second embodiment of the present invention.
FIG. **8** is a rear elevation of the engine according to the second embodiment of the present invention.
FIG. **9** is a left side view of the engine according to the second embodiment of the present invention.
FIG. **10** is a partially sectional view of an intake manifold of the engine according to the second embodiment of the present invention.
FIG. **11** is a right side view of the engine according to the second embodiment of the present invention.

### Description of Special Embodiment

The embodiments of the present invention will be described below in detail with reference to the accompanying drawings.

### (First Embodiment)

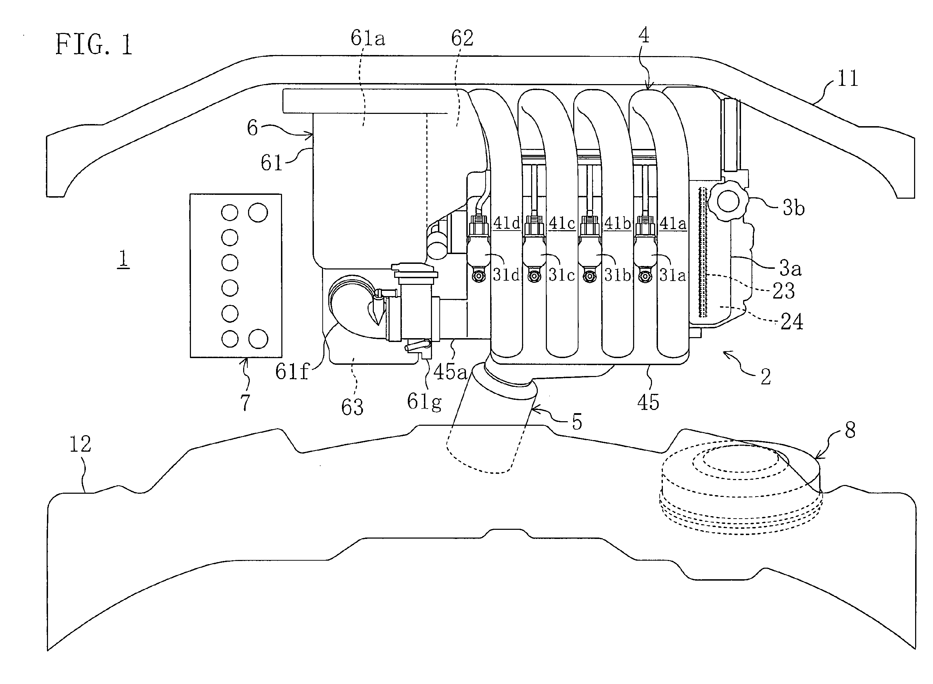

FIG. **1** through FIG. **6** shows an engine according to the first embodiment of the present invention. Reference numeral **1** denotes an engine compartment located in the front part of a vehicle, **2** denotes a four-cylinder in line engine mounted transversely in the engine compartment **1, 11** denotes a shroud upper that defines the front end of the engine compartment **1, 12** denotes a cowl upper panel arranged on the upper face of a dash panel (not shown) that defines the rear end of the engine compartment **1, 13** denotes a bonnet that slants so as to reduce its height as it goes forward of the vehicle and defines the upper face of the engine compartment **1,** and **14** denotes a radiator arranged in a part on the vehicle front side of the engine **2. 7** and **8** are a battery and a vacuum toggle for break, respectively.

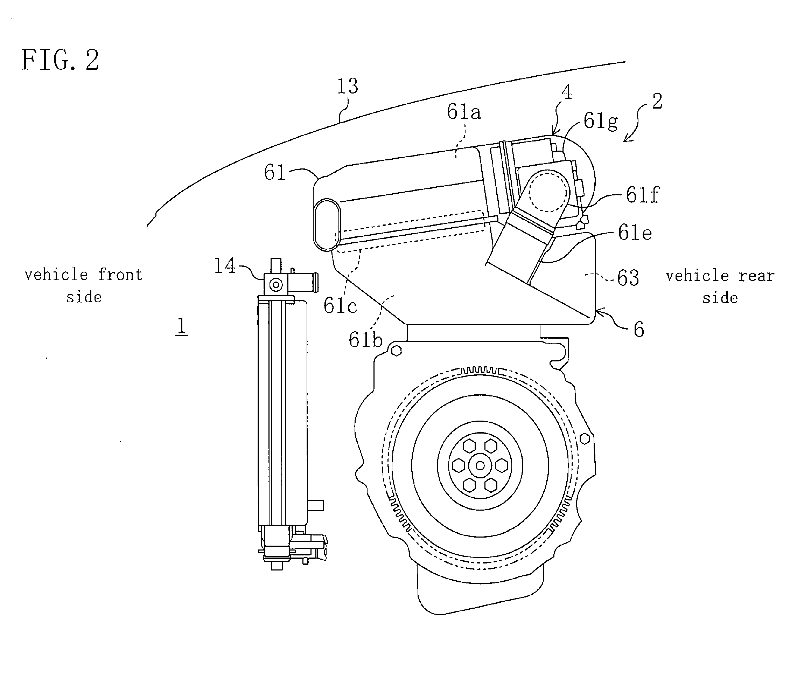

As shown in FIG. **1** and FIG. **2,** the engine compartment **1** is small especially in the longitudinal direction of the vehicle and the engine **2** is mounted transversely and substantially perpendicular in the engine compartment **1.** An air cleaner unit **6** is provided on the rear side of the engine **2** (left side in vehicle transverse direction). The battery **7** is provided on the vehicle left side of the engine **2** and the vacuum toggle **8** is provided on the vehicle right side at the vehicle rear side of the engine **2.** In this way, a space in the small engine compartment **1** is efficiently utilized with the engine **2** located in the main. Further, the battery **7** and the vacuum toggle **8,** which are comparatively large in volume among the functional engine elements, are provided on the left and right sides in the transverse direction of the engine compartment **1,** respectively, thereby balancing the layout in the engine compartment **1.**

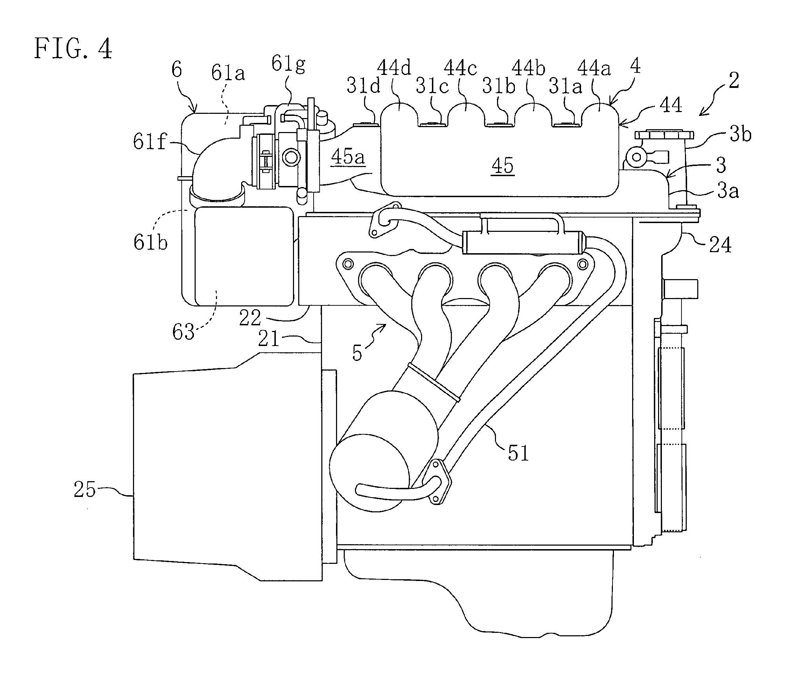

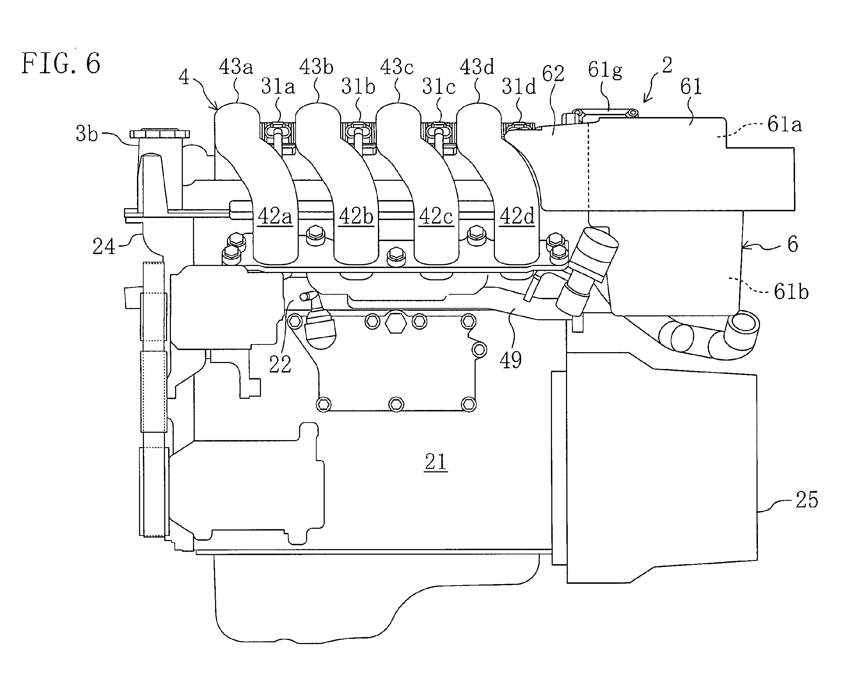

The engine **2** is a four-cylinder in line engine in which four cylinders (not shown) are arranged in series in the longitudinal direction of the engine **2.** In front of the engine **2** (right side in FIG. **1),** two cam sprockets formed at the front end of a camshaft (not shown) provided in a cylinder head **22** and a crank sprocket formed at the engine front end of the crankshaft are provided and a timing chain **23** is wound around the cam sprockets and the crank sprocket. A chain room **24** is formed for accommodating each sprocket and the timing chain **23.** A transmission **25** (shown only in FIG. **4** and FIG. **6**) is provided behind the engine **2** (left side in FIG. **1**)**.** Intake ports that communicate separately with the cylinders are formed in the left side face of the engine **2** (upper side in FIG. **1**), and exhaust ports that communicate separately with the cylinders are formed in the right side face of the engine **2** (lower side in FIG. **1**)**.** In this way, the engine **2** intakes air at the front portion and exhausts air at the rear portion.

In the engine **2,** as shown in FIG. **4,** the cylinder head **22** is provided above a cylinder block **21** and the upper part of the cylinder head **22** is covered with a cylinder head cover **3.** The front end portion **3a** of the cylinder head cover **3** is extended frontward of the engine **2** farther than the front end of the cylinder head **22** to define the upper face of the chain room **24.** An engine oil filler port **3b** for injecting engine oil is formed in the front end portion **3a** of the cylinder head cover **3.** Spark plug units **31** stand in the central portion of the cylinders, respectively, so as to project upward from the cylinder head cover **3.** The spark plug units **31** are arranged in a line with regular intervals left in the longitudinal direction of the engine **2** when viewing the engine **2** in a plane and are aligned with the intake ports and the exhaust ports in the widthwise direction of the engine **2.** Wherein, the spark plug units **31** are a first spark plug unit **31a,** a second spark plug unit **31b,** a third spark plug unit **31c** and a fourth spark plug unit **31d** in this order from the front side of the engine **2.**

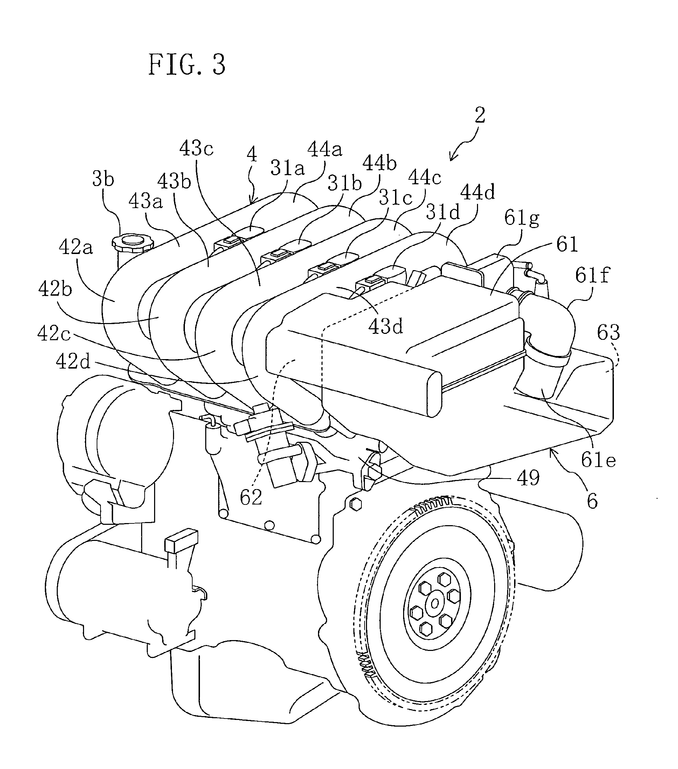

An intake manifold **4** for sending intake air to the cylinders through the intake ports covers the upper portion of the engine **2,** as shown in FIG. **3.** The intake manifold **4** is composed of four independent intake branch pipes **41;** an intake air collecting pipe **45** that communicates with the intake branch pipes **41;** and an intake pipe length exchanging device **46** that optimizes intake air filling efficiency by exchanging the intake pipe length according to the number of rotation of the engine **2.** Wherein, the intake manifold **4** is mounted on the intake side of the engine **2** via an EGR distribution unit **49.**

On the other hand, as shown in FIG. **4,** an exhaust manifold **5** for discharging burnt gas in the cylinders through the exhaust ports is provided in the right side face of the engine **2.** The exhaust manifold **5** is composed of exhaust branch pipes respectively communicating with the exhaust ports and an exhaust air collecting pipe into which the exhaust branch pipes are gathered. Part of exhaust gas is sent to the EGR distribution unit **49** through an EGR hose **51** to be re-circulated.

Each intake branch pipe **41** includes a downstream curved portion **42** (curved portion) which is located farther frontward of the vehicle than the engine **2** and communicates with the corresponding intake port, an extended portion **43** which is located above the cylinder head cover **3** and continues to the downstream curved portion **42,** and an upstream curved portion **44** which is located on the vehicle rear side and continues to the extended portion **43.** An intake air collecting pipe **45** is arranged on the vehicle rear side of the engine **2** and communicates with the end portion of each upstream curved portion **44.** It is noted that the reference numerals **41a, 41b, 41c, 41d** are assigned to a first intake branch pipe, a second intake branch pipe, a third intake branch pipe and a fourth intake branch pipe in this order from the engine front side, respectively, and the same references a to d are added to the reference numerals of the corresponding upstream curved portion **42,** extended portion **43** and upstream curved portion **44** in the same manner, respectively.

As shown in FIG. **1** and FIG. **3,** each extended portion **43** is a substantially straight pipe extending in the longitudinal direction of the vehicle and is offset frontward of the engine **2** against the corresponding spark plug unit **31** that stands upright at the corresponding cylinder. In other words, the first extended portion **43a** is located between the first foremost spark plug unit **31a** in the direction of the cylinder line of the engine **2** and the engine oil filler port **3b,** and the second to fourth extended portion **43b** to **43d** are located between two corresponding adjacent spark plug units **31a** to **31d.**

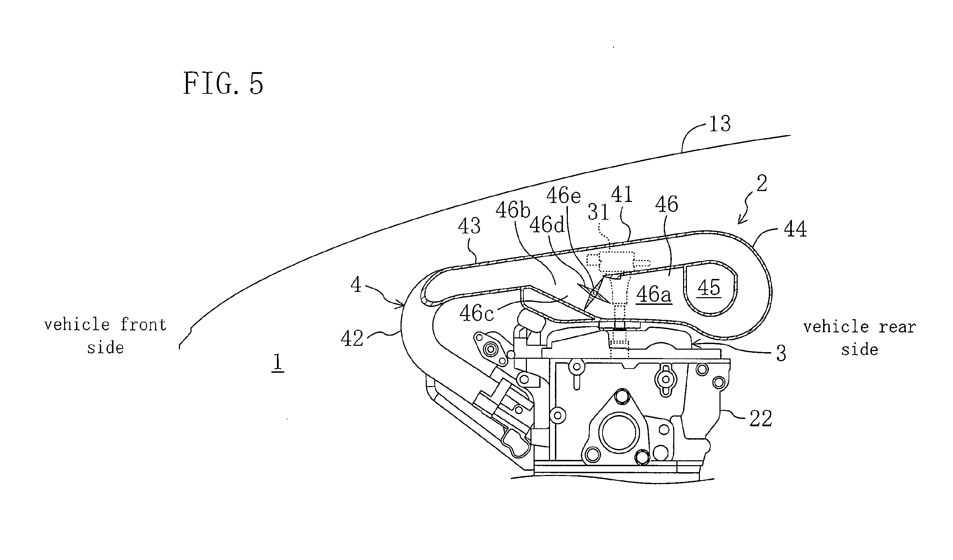

Further, as shown in FIG. **3** and FIG. **5,** each extended portion **43** increases its height as it goes rearward of the vehicle along the bonnet **13** that slants forward, and is overlapped at a part thereof with the spark plug units **31** when viewing the engine **2** from the rear side.

As shown in FIG. **3,** FIG. **5** and FIG. **6,** the downstream curved portions **42** extend frontward of the vehicle and upward from the intake ports, respectively, and curve rearward of the vehicle to communicate with the extended portions **43,** respectively. The downstream curved portions **42** are inclined frontward of the engine **2** so that the upper portions of the downstream curved portions **42** are located farther frontward of the engine **2** than the lower portions thereof when viewing the engine **2** from the front side. Thus, the intake ports and the extended portions **43,** which are offset in the longitudinal direction of the engine **2,** communicate with one another.

As shown in FIG. **3** and FIG. **5,** the upstream curved portions **44** continue to the extended portions **43** and curve downward, respectively, to communicate with the intake air collecting pipe **45.**

As shown in FIG. **1** and FIG. **4,** the intake air collecting pipe **45** is arranged above the engine **2** on the vehicle rear side thereof and under the intake branch pipes **41** so as to extend from the position of the first upstream curved portion **44a** to the position of the fourth upstream curved portion **44d** in the direction of the cylinder line. Each upstream cured portion **44** is connected at the end thereof to the upper surface portion of the intake air collecting pipe **45,** and a manifold side fresh air pipe **45a** is extended at the rear side end of the engine **2** rearward of the engine **2** substantially horizontally.

A space is formed between a part on the vehicle rear side of the intake branch pipes **41,** which increase their height on the vehicle rear side, and the cylinder head cover **3,** and an intake pipe length exchanging device **46** is arranged in the space under the intake branch pipes **41** and above the cylinder head cover **3.**

The intake pipe length exchanging device **46** is composed of: an expansion room **46a** extended in the direction of the cylinder line between the intake air collecting pipe **45** and the spark plug unites 31so as to intersect the extended portions **43** when viewing in a plane; an opening portion **46b** formed at the substantial center in the longitudinal direction of each extended portion **43;** a short pipe potion **46c** extended from each opening portion **46b** and passes under the corresponding extended portion **43** to communicate with the expansion room **46a** from the vehicle front side; and a switch valve **46d** provided in each short pipe portion **46c.** The expansion room **46a** is arranged beside the intake air collecting pipe **45** when viewing the engine **2** from the rear side, and the vehicle rear end of the expansion room **46a** extends in the direction of the cylinder line to communicate with the intake air collecting pipe **45.** In this way, the intake air collecting pipe **45** and the extended portions **43** also communicate with one another through the short pipe portions **46c,** respectively.

The switch valves **46d** are opened and closed according to the number of rotation of the engine **2** to exchange the intake passage between a low-speed intake passage having a long passage length, which sends intake air from the intake air collecting pipe **45** to each intake port through each upstream curved portion **44,** each extended portion **43** and each downstream curved portion **42,** and a high-speed intake passage having a short passage length, which sends intake air from the intake air collecting pipe **45** to each intake port through the expansion room **46a,** each short pipe portion **46c,** the downstream portion of each extended portion **43** and each downstream curved portion **42.**

Further, the switch valves **46d** are located farther frontward of the vehicle than the spark plug units **31** and each valve axis **46e** thereof extends in the direction of the cylinder line of the engine **2.** In this connection, a single shaft (not shown) for driving each switch valve **46d** can be arranged in the direction of the cylinder line so as to avoid interference with each spark plug unit **31.** Further, the arrangement of each switch valve **46d** farther frontward of the vehicle than each spark plug unit **31** necessarily leads to arrangement of each opening portion **46b** farther frontward of the vehicle than each spark plug unit **31.** As a result, the difference in pipe length between the low-speed intake passage and the high-speed intake passage can be set large and the intake air filling efficiency is optimized for the widely ranging number of rotation of the engine **2.**

The air cleaner unit **6** includes an air cleaner case **61** and two independently formed resonance chambers **62, 63,** as shown in FIG. **1,** Fig. **3** and FIG. **6,** which are disposed integrally above the transmission **25.**

The air cleaner case **61** includes, as shown in FIG. **2,** an upper dusty side room **61a** and a lower clean side room **61b.** The dusty side room **61a** and the clean side room **61b** are divided by an inclined air cleaner element **61c.** The clean side room **61b** includes a fresh air sucking port **61e** on the vehicle rear side.

The air cleaner element **61c** is inclined so as to increase its height as it goes rearward of the vehicle. In this connection, the area of the air cleaner element **61c** in the air cleaner case **61** can be increased compared with the case where the air cleaner element **61c** is arranged vertically or horizontally in the air cleaner case **61.** Further, the clean side room **61b** is expanded in the vertical direction as it goes rearward of the vehicle, whereby a sufficient space for arranging the fresh air sucking port **61e** can be ensured on the vehicle rear side portion of the clean side room **61b.**

The lower portion of the air cleaner case **61** overlaps with the cylinder head cover **3** and the cylinder head **22** when viewing the engine **2** from the rear side, so as to arrange the air cleaner unit **6** low as far as possible.

The fresh air sucking port **61e** is extended rearward of the vehicle and upward from the vehicle rear side of the clean side room **61b,** and is connected to the upstream end of an air cleaner side fresh air pipe **61f.** The downstream end of the air cleaner side fresh air pipe **61f** curves toward the intake air collecting pipe **45** and is connected to the upstream side of a throttle valve unit **61g.** The downstream side of the throttle valve unit **61g** is connected to a manifold side fresh air pipe **45a.**

The manifold side fresh air pipe **45a** is extended substantially horizontally from the intake air collecting pipe **45** so that the air cleaner side fresh air pipe **61f** and the throttle valve unit **61g** have substantially the same height as that of the intake manifold **4,** thereby not projecting upward, as shown in FIG. **4.** Therefore, no increase in the overall height of the engine is necessary.

The resonance chamber **62** is arranged adjacent to the dusty side room **61a** on the engine front side as shown in FIG. **1,** and a part thereof is arranged so as to overlap with the cylinder head cover **3** when viewing the engine **2** in a plane in a space above the cylinder head cover **3,** which is created by offsetting the fourth intake branch pipe **41d** frontward of the engine **2.**

The other resonance chamber **63** is located adjacent to the clean side room **61b** on the vehicle rear side and below the air cleaner side fresh air pipe **61f,** as shown in FIG. **1,** FIG. **2** and FIG. **3.**

Fresh air introduced in the dusty side room **61a** is cleaned by the air cleaner element **61c** and is introduced into the clean side room **61b.** Then, after being sucked from the fresh air sucking port **61e** on the vehicle rear side of the clean side room **61b,** the fresh air is sent from the air cleaner side fresh air pipe **61f** to the intake air collecting pipe **45** of the intake manifold **4** through the throttle valve unit **61g** and the manifold side fresh air pipe **45a.** The two resonance chambers **62, 63** restrict resonance vibration caused due to difference between two frequencies.

With the above construction, the extended portions **43** of the intake manifold **4** are located above the engine **2** as shown in FIG. **3** and FIG. **5,** so that only the downstream curved portions **42** project frontward of the vehicle from the left side of the engine **2,** thereby reducing the width of the engine **2,** that is, the dimension of the engine **2** in the longitudinal direction of the vehicle.

As shown in FIG. **3,** FIG. **5** and FIG. **6,** though the extended portions **43** are arranged above the cylinder head cover **3,** the overall height of the engine **2** is reduced to the most because the extended portions **43** are respectively offset frontward of the engine against the spark plug units **31** projecting upward over the cylinder head cover **3** and respectively overlap with the spark plug units **31** when viewing the engine form the rear side.

Further, as shown in FIG. **6,** the offset of each extended portion **43** frontward of the engine is realized by inclining the upper portion of each downstream curved portion **42** frontward of the engine **2** when viewing the side of the engine **2** from the vehicle front side. In this connection, the radius of curvature of each downstream curved portion **42** is increased even when difference in the height between the intake ports and the extended portions **43** is reduced by reducing the height of the extended portions **43,** with a result that the intake air resistance in the intake manifold **4** is lowered and the intake air filling efficiency in each cylinder is increased.

Moreover, the extended portions **43** are respectively offset against the spark plug units **31** frontward of the engine **2,** instead of rearward thereof, to ensure a space above the cylinder head cover **3** and farther rearward of the engine **2** than the fourth extended portion **43d.** The formation of the engine oil filler port **3b** in the front end portion **3a** of the cylinder head cover **3** ensures the space in front of the foremost first spark plug unit **31a** in the direction of the cylinder line of the engine **2 ,** thereby avoiding interference between the first extended potion **43a** and the engine oil filler port **3b.**

Furthermore, the air cleaner unit **6** can be arranged above the transmission **25** by utilizing the space above the cylinder head cover **3** and farther rearward of the engine **2** than the rearmost spark plug unit **31d** in the direction of the cylinder line of the engine **2,** which is created by offsetting the extended portions **43** frontward of the engine **2.**

Reduction of the overall width of the engine **2** including the intake manifold **4,** that is, reduction of the outer dimension in the longitudinal direction of the vehicle necessitates no inclination by the engine **2** rearward of the vehicle for reducing the space that the engine occupies in the longitudinal direction of the vehicle. In this connection, even when the engine **2** is arranged substantially perpendicular as shown in FIG. **2,** the crushable zone is ensured between the engine **2** and the radiator **14** located on the vehicle front side of the engine **2.**

Each intake branch pipe **41** is arranged so as to increase its height as it goes rearward of the vehicle along the bonnet **13** that slants forward, so that the crushable zone is ensured between the intake branch pipes **41** and the bonnet **13** over the longitudinal direction of the intake branch pipes **41.**

In association, the intake pipe length exchanging device **64** can be disposed compactly in a space defined by the intake branch pipes **41,** the cylinder head cover **3** and the intake air collecting pipe **45,** which is substantially triangular when viewing the vehicle from the side. In other words, the expansion room **46a** and the intake air collecting pipe **45** are located below the intake branch pipes **41** with no vertical overlap and they are arranged side by side in the longitudinal direction of the vehicle, thereby reducing the overall height of the intake manifold **4.**

The expansion room **46a** and the intake air collecting pipe **45** are hidden by the intake branch pipes **41** when viewing the engine **2** in a plane, with a result that the appearance of the upper portion of the engine **2** is improved even in the case with no engine cover provided.

Each intake branch pipe **41** is extended long in the form of the downstream curved portion **42,** the extended portion **43** and the upstream curved portion **44** from the vehicle front side to the vehicle rear side of the engine **2,** resulting in increase in the low-speed torque of the engine **2.**

Hence, the engine **2** can be mounted compactly in the longitudinal direction of the vehicle in the small engine compartment **1** even with the radiator **14** provided on the vehicle front side of the engine **2** and with the crushable zone ensured.

Further, the engine **2** can be mounted compactly also in the vertical direction of the vehicle in the small engine compartment **1** even with the crushable zone ensured between the bonnet **13** and the engine **2.**

Thus, the functional engine elements can be arranged by efficiently utilizing the space in the small engine compartment **1.**

In addition, the intake manifold **4** having the intake pipe length exchanging device **46** is compactly arranged in the space expanding vertically as it goes rearward of the vehicle, which is formed between the vertically arranged engine **2** and the bonnet **13** thereabove.

### (Second Embodiment)

The intake manifold **4** having the low-speed intake passage and the high-speed intake passage is employed in the first embodiment, but is not limited thereto. An air cleaner unit having a construction different from that in the first embodiment may be employed. The second embodiment will be described below in which the intake manifold and the air cleaner unit have constructions different from those in the first embodiment. Wherein, the same reference numerals are assigned to members having the same constitutions in the following description and the description thereof is omitted.

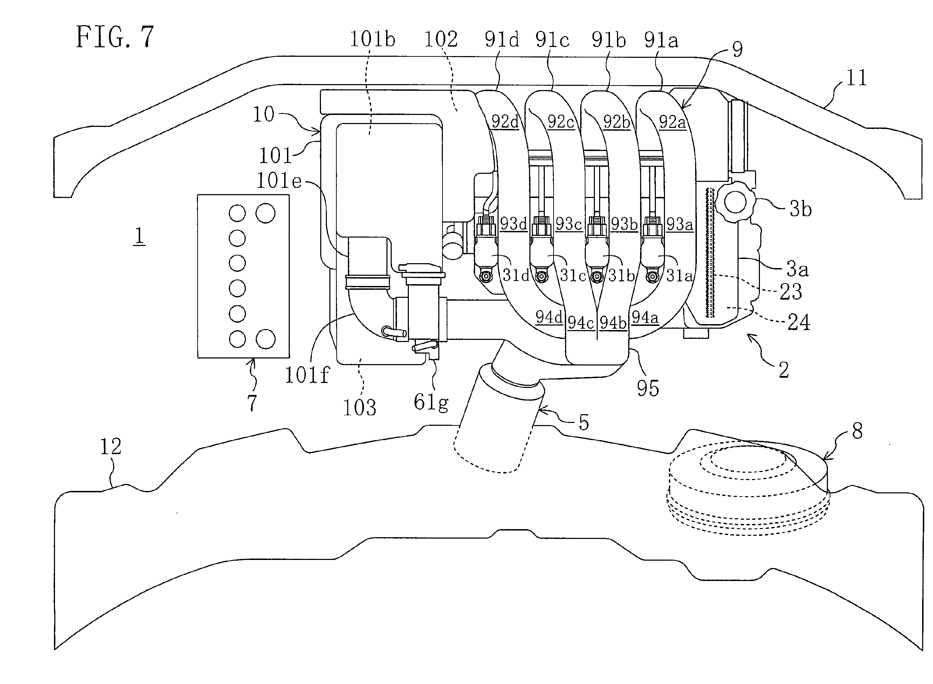

An intake manifold 9 according to the second embodiment is composed of: four independent intake branch pipes **91;** an intake air collecting pipe **95** which communicates with the intake branch pipes **91** and into which the intake branch pipes **91** are gathered; and an intake pipe length exchanging device **96** that optimizes the intake air filling efficiency by exchanging the pipe length according to the number of rotation of the engine **2,** as shown in FIG. **7** to FIG. **10.**

Each intake branch pipe **91** is composed of a downstream curved portion **92** located farther frontward of the vehicle than the engine **2** and continuing to the corresponding intake port; an extended portion **93** located above the cylinder head cover **3** and continuing to the downstream curved portion **92;** and the upstream curved portion **94** located on the vehicle rear side and continuing to the extended portion **93.** Wherein, the reference numerals **91a, 91b, 91c, 91d** are assigned to a first intake branch pipe, a second intake branch pipe, a third intake branch pipe and a fourth intake branch pipe in this order from the engine front side, respectively, and the same references **a** to **d** are added to the reference numerals of the corresponding upstream curved portion **92,** the extended portion **93** and the upstream curved portion **94** in the same manner, respectively. An intake air collecting pipe **95** is arranged at a part corresponding to the substantial center between the first intake branch pipe **91a** and the fourth intake branch pipe **91d** in the direction of the cylinder line on the vehicle rear side of the engine **2.** The end portion of each upstream curved portion **94** communicates with the intake air collecting pipe **95.**

Each downstream curved portion **92** has the same construction as in the first embodiment and is curved at a part farther frontward of the vehicle than the engine **2** and is inclined frontward of the engine **2.**

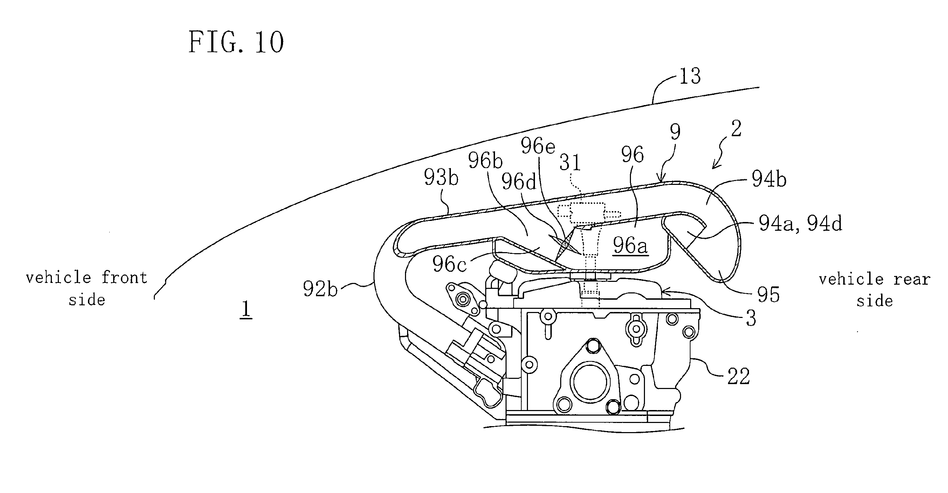

The extended portions **93** are respectively offset frontward of the engine **2** against the spark plug units **31** standing upright at the corresponding cylinders, as shown in FIG. **7,** so that each part thereof overlaps with the spark plug units **31** when viewing the engine **2** from the rear side (see FIG. **10).** The first extended portion **93a** is located between the foremost first spark plug unit **31a** in the direction of the cylinder line of the engine **2** and the engine oil filler port **3b.**

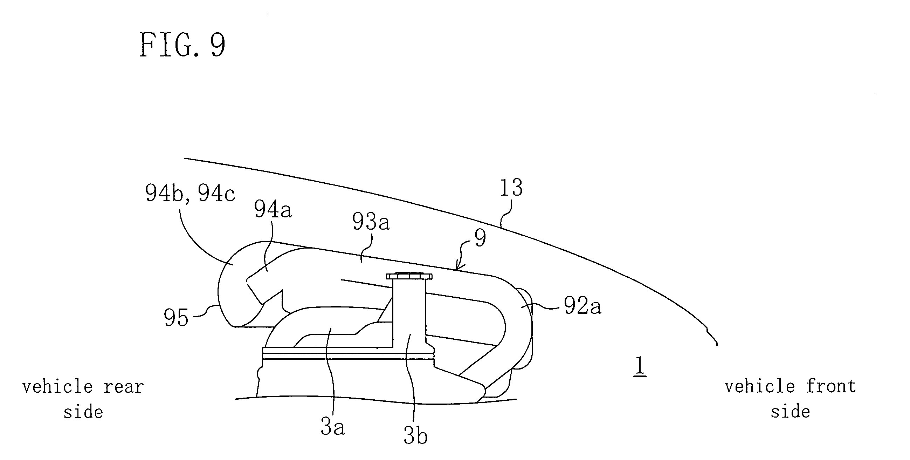

The upstream curved portions **94** are curved and gathered toward the central part of the cylinder line of the engine **2** at a part farther rearward of the vehicle than the spark plug units **31** and are curved further downward on the vehicle rear side of the engine **2,** as shown in FIG. **9** and FIG. **10.**

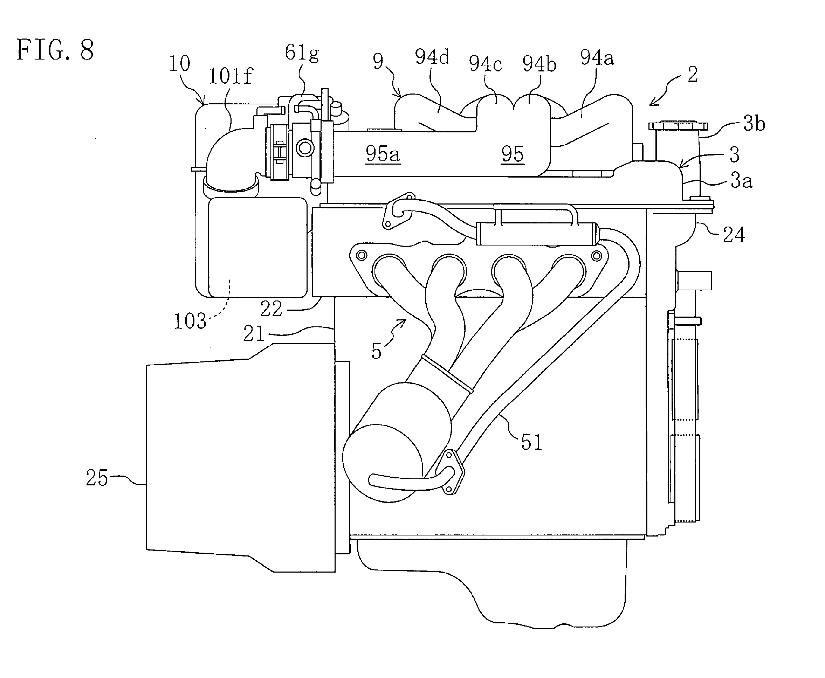

The intake air collecting pipe **95** is located below the second upstream curved portion **94b** and the third upstream curved portion **94c** at a part corresponding to the second upstream curved portion **94b** and the third upstream curved portion **94c** on the vehicle rear side of the engine **2,** as shown in FIG. **7** and FIG. **8.** The second upstream curved portion **94b** and the third upstream curved portion **94c** are connected to the upper portion of the intake air collecting pipe **95** from above, and the first upstream curved portion **94a** and the fourth upstream curved portion **94d** are connected to the upper portion of the intake air collecting pipe **95** from the right and left sides thereof, respectively, at respective parts farther frontward of the vehicle than the second upstream curved portion **94b** and the third upstream curved portion **94c.** With this arrangement, the air intake system can be compacted, the lengths of the intake branch pipes **91** can be prolonged and equalized, the low-speed torque of the engine **2** is improved, and the respective filing efficiencies of the intake air from the respective intake branches pipes **91** to the respective cylinders can be uniformed.

A manifold side fresh air pipe **95a** is extended at the engine rear side of the intake air collecting pipe **95** substantially horizontally rearward of the engine **2** as shown in FIG. **8.** The manifold side fresh air pipe **95a** is connected to the throttle valve unit **61g.**

Each intake branch pipe **91** increases its height as it goes rearward of the vehicle along the bonnet **13** that slants forward, as shown in FIG. **9** and FIG. **10,** and an intake pipe length exchanging device **96** is arranged in a space formed between a part on the vehicle rear side of the intake branch pipes **91** and the cylinder head cover **3.**

The intake pipe length exchanging device **96** is composed of: an expansion room 96a extended in the direction of the cylinder line between the intake air collecting pipe **95** and the spark plug units **31** so as to intersect the extended portions **93** when viewing the engine in a plane; an opening portion **96b** formed at the substantial center in the longitudinal direction of each extended portion **93;** a short pipe portion **96c** extending from each opening portion **96b** and passes under the corresponding extended portion **93** to communicate with the expansion room **96a** from the vehicle front side; and a switch valve **96d** provided in each short pipe portion **96c.** The expansion room **96a** does not communicate with the intake air collecting pipe **95,** different from the expansion room **46a** in the first embodiment, and only communicates with each short pipe portion **96c.** Therefore, the expansion room **96a** serves as a communication pipe for communicating the respective extended portions **93** with on another at the vicinities of the respective opening portions **96b.**

The switch valves **96d** are opened and closed according to the number of rotation of the engine **2.** Specifically, the switch valves **96d** are closed when the number of rotation of the engine **2** is in a low speed range while being opened when the number of rotation thereof is in a high speed range so as to exchange the pressure inversion part where the basic pressure wave of the intake air is inverted, thereby optimizing the intake air filling efficiency.

The switch valves **96d** are located farther frontward of the vehicle than the spark plug units **31** and each valve axis **96e** thereof extends in the direction of the cylinder line of the engine **2.** In this connection, a single shaft (not shown) for driving each switch valve **96d** can be arranged in the direction of the cylinder line so as to avoid interference with each spark plug unit **31.** Further, the arrangement of each switch valve **96d** farther frontward of the vehicle than each spark plug unit **31** necessarily leads to arrangement of each opening portion **96b** farther frontward of the vehicle than each spark plug unit **31.** As a result, the difference in pipe length between the low-speed intake passage and the high-speed intake passage can be set large and the intake air filling efficiency can be optimized for the widely ranged number of rotation of the engine **2.**

Further, the expansion room **96a** and the intake air collecting pipe **95** are hidden by the intake branch pipes **91** when viewing the engine **2** in a plane, and therefore, the appearance of the upper portion of the engine **2** is improved even in the case with no engine cover provided.

Each intake branch pipe **91** is extended long in the form of the downstream curved portion **92,** the extended portion **93** and the upstream curved portion **94** from the vehicle front side to the vehicle rear side of the engine **2,** resulting in increase in the low-speed torque of the engine **2.**

The air cleaner unit **10** according to the second embodiment includes an air cleaner case **101** and two independently formed resonance chambers **102, 103,** as shown in FIG. **7** and FIG. **10,** which are disposed integrally above the transmission **25** (not shown in the drawings).

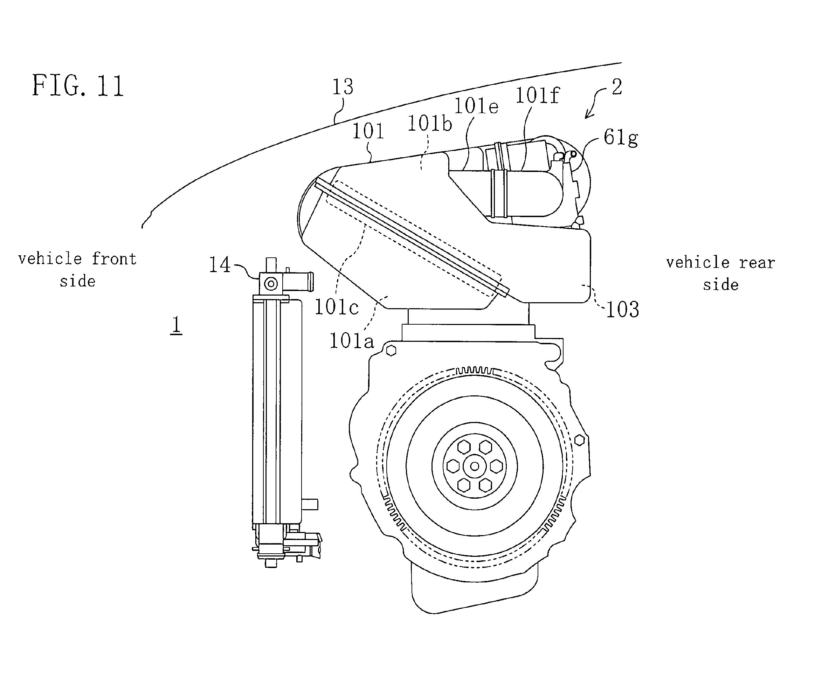

The air cleaner case **101** includes, as shown in FIG. **11,** a lower dusty side room **101a** and an upper clean side room **101b.** The dusty side room **101a** and the clean side room **101b** are divided by an inclined air cleaner element **101c.** The clean side room **101b** includes a fresh air sucking port **101e** on the vehicle rear side.

The air cleaner element **101c** is inclined so as to reduce its height as it goes rearward of the vehicle. In this connection, the area of the air cleaner element **101c** in the air cleaner case **101** can be increased, and the clean side room **101b** is increased in its height as it goes rearward of the vehicle, whereby a sufficient space for arranging the fresh air sucking port **101e** can be ensured in the vehicle rear side portion of the clean side room **101b.**

The fresh air sucking port **101e** is extended from the vehicle rear side of the clean side room **101b** rearward of the vehicle. The upstream end of an air cleaner side fresh pipe **101f** is connected to the fresh air sucking port **101e,** while the downstream end thereof is curved toward the intake air collecting pipe 95 and is connected to the upstream end of the throttle valve unit **61g.** The downstream end of the throttle valve unit **61g** is connected to a manifold side fresh air pipe **95a.**

Thus, the manifold side fresh air pipe **95a,** the air cleaner side fresh air pipe **101f** and the throttle valve unit **61g** have substantially the same height as that of the intake manifold **9** so as not to project upward, as shown in FIG. **8** and FIG. **11.** Therefore, no increase in the overall height of the engine **2** is necessary.

The resonance chamber **102** is arranged adjacent to the air cleaner case **101** on the engine front side and a part thereof overlaps with the cylinder head cover **3** when viewing the engine **2** in a plane in a space above the cylinder head cover **3,** which is created by offsetting the fourth intake branch pipe **91d** frontward of the engine **2.** The other resonance chamber **103** is located adjacent to the clean side room **101b** on the vehicle rear side and below the air cleaner side fresh air pipe **101f.** The two resonance chambers **102, 103** restrict resonance vibration caused due to difference between two frequencies.

Fresh air introduced in the dusty side room **101a** is cleaned by the air cleaner element **101c** and is introduced into the clean side room **101b.** Then, after being sucked from the fresh air sucking port **101e,** the fresh air is sent from the air cleaner side fresh air pipe **101f** to the intake air collecting pipe **95** of the intake manifold **9** through the throttle valve unit **61g** and the manifold side fresh air pipe **95a.**

Even though the intake manifold **9** and the air cleaner unit **10** are arranged in the small engine compartment **1,** the engine **2** can be compactly mounted, the crushable zone can be ensured on the vehicle front side and above of the engine **2,** and the intake pipe length exchanging device **96** can be arranged efficiently as in the first embodiment.

### (Other Embodiments)

In the present invention, any combinations of the intake manifolds **4, 9** and the air cleaner units **6, 10** in the first and second embodiments are possible.

## Claims

1. An air intake system for a multi-cylinder in line engine **(2)** which is mounted transversely in an engine compartment **(1)** so that intake ports and exhaust ports are formed in a vehicle front side face and a vehicle rear side face, respectively, and which has a cylinder head cover **(3)** and a transmission **(2), characterized in that** the air intake system comprises:
an intake manifold **(4** or **9)** including a plurality of intake branch pipes **(41** or **91)** which are extended rearward of a vehicle from the intake ports over the cylinder head cover **(3)** of the engine **(2),** respectively, and an intake air collecting pipe **(45** or **95)** which communicates with the intake branch pipes **(41** or **91)** on a vehicle rear side of the engine **(2)** and into which the intake branch pipes **(41** or **91)** are gathered;
an air cleaner unit **(6** or **10)** which is provided above the transmission **(25)** on a rear side of the engine **(2);** and
spark plug units **(31)** respectively standing upright at central portions of the corresponding cylinders and projecting upward from an upper face of the cylinder head cover **(3)**,
wherein the intake branch pipes **(41** or **91)** are respectively offset frontward of the engine **(2)** against the spark plug units when viewing the engine **(2)** in a plane, and
at least each part of the intake branch pipes **(41** or **91)** overlaps vertically with the spark plug units **(31)** when viewing the engine (2) from the rear side.

2. The air intake system of Claim 1, wherein
each intake branch pipe **(41** or **91)** includes a curved portion **(42** or **92)** which is extended frontward of the vehicle and upward from the corresponding intake port and is curved rearward of the vehicle, and an extended portion **(43** or **93)** which continues to the curved portion **(42** or **92)** and is extended substantially linearly and rearward of the vehicle over the cylinder head cover **(3),** and
the curved portion **(42** or **92)** is inclined frontward of the engine **(2).**

3. The air intake system of Claim 1 or 2, wherein
the air cleaner unit **(6** or **10)** includes:
an air cleaner case **(61** or **101)** in which a dusty side room **(61a** or **101a)** and a clean side room **(61b** or **101b)** are divided transversely by an air cleaner element **(61c** or **101c),** a fresh air sucking port **(61e** or **101e)** being formed in a vehicle rear side portion of the clean side room **(61b** or **101b);**
a fresh air pipe **(61f** or **101f)** which communicates at one end thereof with the fresh air sucking port **(61e** or **101e)** and at the other end thereof with the intake air collecting pipe **(45** or **95);** and
a throttle valve unit **(61g)** which is provided in the middle of the fresh air pipe **(61f** or **101f),**
the air cleaner element **(61c** or **101c)** is inclined so that the clean side room **(61b** or **101b)** expands vertically as it goes rearward of the vehicle, and
the fresh air pipe **(61f** or **101f)** and the throttle valve unit **(61g**) have a same height as that of the intake manifold **(4** or **9)** or are located lower than the intake manifold **(4** or **9).**

4. The air intake system of any one of Claim 1 to 3, wherein
the air cleaner unit (**6** or **10**) further includes a resonance chamber **(62** or **102)** which is integrally arranged with the air cleaner case **(61** or **101)** at a part where at least a part of the resonance chamber **(62** or **102)** overlaps with the cylinder head cover **(3)** when viewing the engine **(2)** in a plane between a rearmost intake branch pipe **(41d** or **91d)** in a direction of a cylinder line of the engine **(2)** and the air cleaner case **(61** or **101),** and
the air cleaner case **(61** or **101)** is arranged above the transmission **(25)** at a part where the air cleaner case **(61** or **101)** overlaps with the cylinder head cover **(3)** and a cylinder head **(22)** when viewing the engine **(2)** from the rear side.

5. The air intake system of any one of Claims 1 to 4, wherein
in the engine compartment **(1),** a vacuum toggle **(8)** for break and a battery **(7)** are arranged on one side and on the other side in a widthwise direction of the vehicle, respectively, and
the engine **(2)** is arranged between the vacuum toggle **(8)** and the battery **(7)** in a widthwise direction of the vehicle in the engine compartment **(1).**

6. The air intake system of any one of Claim 1 to 5, wherein
the engine **(2)** is mounted substantially perpendicular.

7. The air intake system of Claim 1, wherein
the intake manifold **(4** or **9)** further includes an intake pipe length exchanging device **(46** or **96)** for exchanging an intake pipe length,
the intake pipe length exchanging device **(46** or **96)** includes: short pipes **(46c** or **96c)** respectively communicating with the intake pipe branches **(41** or **91);** an expansion room **(46a** or **96a)** communicating with the respective intake branch pipes **(41** or **91)** through the respective short pipes **(46c** or **96c);** and switch valves **(46d** or **96d)** for respectively communicating with and shutting off between the expansion room **(46a** or **96a)** and the intake branch pipes **(41** or **91),**
a bonnet **(13)** which slants forward defines an upper surface of the engine compartment **(1)** so as to reduce a height as it goes frontward of the vehicle,
the engine **(2)** is mounted substantially perpendicular,
each intake branch pipe **(41** or **91)** is inclined so as to increase a height thereof as it goes rearward of the vehicle along the bonnet **(13)** that slants forward over the cylinder head cover **(3),** and
the expansion room **(46a** or **96a)** is arranged between a vehicle rear side end of the intake branch pipe **(41** or **91)** and the cylinder head cover **(3).**

8. The air intake system of Claim 7, wherein
each intake branch pipe **(41** or **91)** is curved downward at an upstream end thereof to form an upstream curved portion **(44** or **94)** that communicates with the intake air collecting pipe **(45** or **95),** and
the intake air collecting pipe **(45** or **95)** and the expansion room **(46a** or **96a)** are arranged side by side in a longitudinal direction of the vehicle at a part farther frontward of the vehicle than the upstream curved portion **(44** or **94)** when viewing the engine **(2)** from the rear side.

9. The air intake system of Claim 7 or 8, wherein
the expansion room **(46a** or **96a)** is arranged farther rearward of the vehicle than the spark plug units **(31),** while the switch valves **(46d** or **96d)** being arranged farther frontward of the vehicle than the spark plug units **(31),** and
a valve axis **(46e** or **96e)** of each switch valve **(46d** or **96d)** is extended in a direction of a cylinder line of the engine **(2).**

10. The air intake system of any one of Claim 1 to 9, wherein
the engine **(2)** includes: a timing chain **(23)** for driving and connecting a camshaft and a crankshaft which are provided in the cylinder head **(22);** and a chain room **(24)** defining a front portion of the engine **(2)** and accommodating the timing chain **(23),** and
a front end portion **(3a)** of the cylinder head cover **(3)** covers an upper portion of the chain room **(24)** so as to form an upper face of the chain room **(24),** and
an engine oil filler port **(3b)** is formed in the front end portion **(3a)** of the cylinder head cover **(3).**
